# EUROPEAN PATENT SPECIFICATION

(11) **EP 3 306 070 B1**
(45) Date of publication and mention of the grant of the patent: **09.02.2022**
(21) Application number: 16821450.0
(22) Date of filing: 07.07.2016
(51) Int. Cl.: F02M 37/00, F02B 63/02, F02B 75/02, F16F 1/376, F16F 15/02, B25F 5/00, A01D 34/68

(54) **BRUSHCUTTER**
FREISCHNEIDER
DÉBROUSSAILLEUSE

(30) Priority: 08.07.2015 JP 2015137035
(43) Date of publication of application: 11.04.2018
(73) Proprietor: Mitsubishi Heavy Industries Meiki Engines Co.,Ltd., Tsushima-shi, Aichi 496-0023 (JP)
(72) Inventor: SHIMOGAMI, Jun, Sagamihara-shi Kanagawa 252-5293 (JP); UENOYAMA, Kazuyuki, Sagamihara-shi Kanagawa 252-5293 (JP)
(74) Representative: Studio Torta S.p.A.
(86) International application number: PCT/JP2016/070093
(87) International publication number: WO 2017/006981

(56) References cited:
- JP-A- H 041 695
- JP-A- H0 486 253
- JP-A- H03 219 143
- JP-A- H05 149 382
- JP-A- 2010 180 959
- JP-A- 2010 214 996
- JP-A- 2010 214 996
- JP-B2- 3 015 330
- JP-U- S5 320 341
- JP-U- S53 100 876
- US-A1- 2013 180 476

## Description

### TECHNICAL FIELD

The present disclosure relates to a brush cutter.

### BACKGROUND ART

For instance, a fuel tank for an engine used as a driving source of an operating machine such as a brush cutter may be disposed below an engine so as to function as a pedestal of the engine.
Patent Document 1 discloses applying a leg cover formed by bending a plate member with a high wear-resistant property, such as steel sheet, to a leg part of a fuel tank mounted below an engine of a brush cutter.
Patent Document 2 discloses an asymmetrical rubber member disposed between a gaseous fuel tank and a tank support of a motor vehicle.
Patent Document 3, Patent Document 4 and Patent Document 5 disclose other configurations of brush cutters.

### Citation List

### Patent Literature

Patent Document 1: JPH2-23796A
Patent Document 2: JP 2010-214996 A
Patent Document 3: US 2013/180476 A1
Patent Document 4: JP S53 20341 U
Patent Document 5: JP 3 015330 B2

### SUMMARY

### Problems to be Solved

Meanwhile, when an engine provided with a fuel tank that functions as a pedestal is placed on ground and is in operation (in idle operation of the engine), the engine may move due to vibration of the engine itself (self-running). With regard to the above problem, movement of an engine due to vibration can be suppressed by providing an elastic member such as rubber capable of absorbing vibration of the engine to a bottom part of a fuel tank. However, further improvement is in demand.

The present invention was made in view of the above typical problem, and an object is to provide a brush cutter capable of suppressing movement caused by vibration of the brush cutter engine.

### Solution to the Problems

(1) A brush cutter
according to at least one embodiment of the present invention comprises: a control rod; a rotatable blade disposed on an end of the control rod; a protection cover disposed so as to cover a part of the blade; and an engine disposed on the other end of the control rod, the engine comprising: a cylinder; a piston forming a combustion chamber with the cylinder; a crank shaft for converting reciprocating motion of the piston into rotational motion; and a fuel tank, the fuel tank comprising:
a fuel tank body for accommodating fuel of an engine; and at least one elastic member disposed on a bottom surface of the fuel tank body. The at least one elastic member includes at least one protruding portion protruding downward and having a contact surface to be in contact with ground, the at least one elastic member having an asymmetric shape in at least one of an axial direction of a crank shaft of the engine (hereinafter, referred to as front-rear direction) or a horizontal direction intersecting with the front-rear direction (hereinafter, referred to as right-left direction).

(2) Furthermore, in the above brush cutter (1), defining that a front direction is an output side of the crank shaft in the front-rear direction, the protruding portion includes: a front surface formed on a front side in the front-rear direction; and a rear surface formed on a rear side in the front-rear direction, and an inclination angle of the front surface with respect to a vertical direction is different from an inclination angle of the rear surface with respect to the vertical direction.

With the above brush cutter (2), in a case where the engine is in operation while being disposed on the ground, it is possible to orient the reaction force, received by the engine from the ground via the elastic member associated with vibration of the engine, in the front-rear direction. Thus, by setting the inclination angles of the front surface and the rear surface such that a reaction force occurs in the opposite direction to the direction in which the engine is likely to move in vibration, it is possible to suppress movement in the front-rear direction caused by vibration of the engine. In the brush cutter
described in the above (2), the inclination angle of the front surface with respect to the vertical direction or the inclination angle of the rear surface with respect to the vertical direction may be zero degree.

(3) In some embodiments, in the above brush cutter (2), the inclination angle of the rear surface with respect to the vertical direction is greater than the inclination angle of the front surface with respect to the vertical direction.

With the above brush cutter (3), in a case where the engine is in operation while being disposed on the ground, it is possible to orient the reaction force, received by the engine from the ground via the elastic member associated with vibration of the engine, in the rearward direction. Thus, in a case where the engine is in operation while being disposed on the ground, it is possible to suppress forward movement of the engine caused by vibration of the engine. For instance, in a case where the brush cutter is disposed on the ground, the reaction force received by a protection cover having a semi-circular shape that protrudes downward, due to vibration of the engine, may cause the engine to move forward, and such movement can be suppressed. In the brush cutter described in the above (3), the inclination angle of the front surface with respect to the vertical direction may be zero degree.

(4) In some embodiments, in the brush cutter described in any one of the above (2) to (3), defining that a left direction is a rotational tangent direction at a lower end of the crank shaft in the right-left direction, the protruding portion includes: a left surface formed on a left side in the right-left direction; and a right surface formed on a right side in the right-left direction, and an inclination angle of the left surface with respect to a vertical direction is different from an inclination angle of the right surface with respect to the vertical direction.

With the above brush cutter (4), in a case where the engine is in operation while being disposed on the ground, it is possible to orient the reaction force, received by the engine from the ground via the elastic member associated with vibration of the engine, in the right-left direction. Thus, by setting the inclination angles of the left surface and the right surface such that a reaction force occurs in the opposite direction to the direction in which the engine is likely to move in vibration, of the right-left direction, it is possible to suppress movement in the right-left direction caused by vibration of the engine. In the brush cutter described in the above (4), one of the inclination angle of the left surface with respect to the vertical direction or the inclination angle of the right surface with respect to the vertical direction may be zero degree.

(5) In some embodiments, in the brush cutter described in the above (4), the inclination angle of the left surface with respect to the vertical direction is greater than the inclination angle of the right surface with respect to the vertical direction.

With the above brush cutter (5), in a case where the engine is in operation while being disposed on the ground, it is possible to orient the reaction force, received by the engine from the ground via the elastic member associated with vibration of the engine, in the leftward direction. Thus, in a case where the engine is in operation while being disposed on the ground, it is possible to suppress rightward movement of the engine caused by vibration of the engine. In the brush cutter described in the above (5), the inclination angle of the right surface with respect to the vertical direction may be zero degree.

For instance, in the above engine, a force of explosion is applied to a piston inside a cylinder when the piston starts to move downward from the top dead center. Thus, a greater force is applied to the crank shaft via a connecting rod when the piston moves downward, than when the piston moves upward. Thus, in a case where the engine is in operation while being disposed on the ground, a force is applied to the engine so as to move the engine in the opposite direction (rightward direction) to the rotational tangent direction (leftward direction) at the lower end of the crank shaft, due to the force of explosion inside the cylinder. In this regard, with the inclination angle of the left surface being greater than the inclination angle of the right surface as described above, it is possible to suppress rightward movement of the engine caused by a force of explosion inside the cylinder.

(6) In some embodiments, in the brush cutter described in any one of the above (2) to (5), the contact surface of the protruding portion is inclined in at least one of the front-rear direction or the right-left direction.

With the above brush cutter (6), the contact surface of the protruding portion is inclined in at least one of the front-rear direction or the right-left direction. Thus, in a case where the engine is in operation while being disposed on the ground, it is possible to orient the reaction force, received by the engine from ground via the elastic member associated with vibration of the engine, in at least one of the front-rear direction or the right-left direction. Thus, with the inclination direction of the contact surface being set such that a reaction force occurs in an opposite direction to a direction in which the engine is likely to move in vibration, in at least one of the front-rear direction or the right-left direction, it is possible to suppress movement caused by vibration of the engine.

(7) In some embodiments, in the brush cutter described in the above (6), defining that a front direction is an output side of the crank shaft in the front-rear direction, the contact surface of the protruding portion is inclined so as to be positioned lower in the front direction.

With the above brush cutter (7), in a case where the engine is in operation while being disposed on the ground, it is possible to orient the reaction force, received by the engine from the ground via the elastic member associated with vibration of the engine, in the rearward direction. Thus, in a case where the engine is in operation while being disposed on the ground, it is possible to suppress forward movement of the engine caused by vibration of the engine. For instance, in a case where the brush cutter is disposed on the ground, the reaction force received by the protection cover, having a semi-circular shape that protrudes downward, due to vibration of the engine, may cause the engine to move forward, and such movement can be suppressed.

(8) In some embodiments, in the brush cutter described in the above (6) or (7), defining that a left direction is a rotational tangent direction at a lower end of the crank shaft in the right-left direction, the contact surface of the protruding portion is inclined so as to be positioned lower in the right direction.

With the above brush cutter (8), in a case where the engine is in operation while being disposed on the ground, it is possible to orient the reaction force, received by the engine from the ground via the elastic member associated with vibration of the engine, in the leftward direction. Thus, in a case where the engine is in operation while being disposed on the ground, it is possible to suppress rightward movement of the engine caused by vibration of the engine. For instance, it is possible to suppress rightward movement of the engine, that is caused by a force of explosion inside the cylinder described above.

(9) In some embodiments, in the brush cutter according to any one of the above (2) to (8), the at least one protruding portion comprises a first protruding portion group including a plurality of protruding portions each of which extends along the front-rear direction, a second protruding portion group including a plurality of protruding portions each of which extends along the right-left direction, and a third protruding portion group including a plurality of protruding portions each of which extends along the front-rear direction. The second protruding portion group is disposed between the first protruding portion group and the third protruding portion group in the front-rear direction.

With the above brush cutter (9), the elastic member can exert a high gripping force in the front-rear direction and the right-left direction. Thus, in a case where the engine is in operation while being disposed on the ground, it is possible to suppress movement of the engine in the front-rear direction and the right-left direction caused by vibration of the engine.

(10) In some embodiments, in the brush cutter described in the above (9), defining that a front direction is an output side of the crank shaft in the front-rear direction, each protruding portion of the first to third protruding portion groups includes: a front surface formed in front in the front-rear direction; and a rear surface formed in rear in the front-rear direction. An inclination angle of the rear surface with respect to a vertical direction is greater than an inclination angle of the front surface with respect to the vertical direction, in each protruding portion of the first to third protruding portion groups.

With the above brush cutter (10), through combination of the effect to suppress movement of the engine achieved by the gripping force of the first to third protruding portion groups described in the above (9) and the effect to suppress forward movement of the engine achieved by the greater inclination angle of the rear surface of each protruding portion of the first to third protruding portion groups, it is possible to suppress movement of the engine due to vibration of the engine itself effectively. In the brush cutter described in the above (10), the inclination angle of the front surface with respect to the vertical direction may be zero degree, in each protruding portion of the first to third protruding portion groups.

(11) In some embodiments, in the brush cutter described in the above (9) or (10), defining that a front direction is an output side of the crank shaft in the front-rear direction, the third protruding portion group is disposed in rear of the first protruding portion group, and each protruding portion of the first to third protruding portion groups includes: a front surface formed in front in the front-rear direction; and a rear surface formed in rear in the front-rear direction. An inclination angle of the rear surface with respect to a vertical direction in each protruding portion of the third protruding portion group is greater than an inclination angle of the rear surface with respect to the vertical direction in each protruding portion of the first protruding portion group.

If the inclination angle of the rear surface is increased to suppress forward movement of the engine due to vibration of the engine, the contact area that can be ensured tends to be small compared to the size of the elastic member in the front-rear direction. In this regard, with the inclination angle of the rear surface of each protruding portion of the third protruding portion group being greater than the inclination angle of the rear surface of each protruding portion of the first protruding portion group, it is possible to effectively suppress forward movement of the engine caused by vibration of the engine, while suppressing reduction of the contact area.

(12) In some embodiments, in the brush cutter described in any one of the above (2) to (11), the elastic member includes a first hole and a second hole disposed proximate to a bottom surface of the fuel tank body. The bottom surface of the fuel tank body includes a first projection and a second projection formed thereon, the first projection having an outer peripheral surface to be in contact with an inner peripheral surface of the first hole and the second projection having an outer peripheral surface to be in contact with an inner peripheral surface of the second hole. The first hole and the second hole are disposed asymmetrically in at least one of the front-rear direction or the right-left direction.

In production of a fuel tank, when mounting the elastic member having an asymmetrical shape at least in one of the front-rear direction or the right-left direction to the bottom surface of the fuel tank body, arranging the elastic member in a wrong direction may lead to enhancement of the movement of the fuel tank that is caused by vibration. In this regard, as described in the above (12), with the first hole and the second hole being arranged asymmetrically in at least one of the front-rear direction or the right-left direction, it is possible to mount the elastic member to the bottom surface of the fuel tank body in an appropriate direction, and to fix the elastic member and the fuel tank body firmly.

(13) In some embodiments, in the brush cutter described in any one of the above (2) to (12), the at least one elastic member comprises two elastic members having different elastic moduli from each other.

With the above brush cutter (13), by setting different elastic moduli for the respective elastic members so as to generate a reaction force in an opposite direction to a direction in which the engine is likely to move in vibration (net force of reaction forces (elastic forces) received by the engine from the two elastic members via ground), it is possible to enhance the effect to suppress movement caused by vibration of the engine.

(14) A brush cutter according to at least one embodiment of the present invention comprises: a control rod; a rotatable blade disposed on an end of the control rod; a protection cover disposed so as to cover a part of the blade; and an engine disposed on the other end of the control rod, the engine comprising: a cylinder; a piston forming a combustion chamber with the cylinder; a crank shaft for converting reciprocating motion of the piston into rotational motion; and a fuel tank, the fuel tank comprising:
a fuel tank body for accommodating fuel of an engine; and at least two elastic members disposed on a bottom surface of the fuel tank body, each of which having a contact surface to be disposed on ground. The at least two elastic members include two elastic members having different elastic moduli from each other, wherein one of the at least two elastic members has a different elastic modulus from the other of the at least two elastic members.

With the above brush cutter (14), by setting different elastic moduli for the respective elastic members so as to generate a reaction force in an opposite direction to a direction in which the engine is likely to move in vibration (net force of reaction forces (elastic forces) received by the engine from the two elastic members via ground), it is possible to suppress movement caused by vibration of the engine.

### Advantageous Effects

According to at least one embodiment of the present invention, provided is a brush cutter capable of suppressing movement caused by vibration of the brush cutter engine.

### BRIEF DESCRIPTION OF DRAWINGS

FIG. 1 is a schematic perspective view of a brush cutter 100 according to an embodiment.
FIG. 2 is a partial cross sectional view of an engine 8 (cross sectional view perpendicular to the axial direction of a crank shaft 14 of the engine 8).
FIG. 3 is a partial cross sectional view of an engine 8 (cross sectional view along the axial direction of the crank shaft 14 of the engine 8).
FIG. 4 is a front view of a fuel tank 16.
FIG. 5 is a side view of the fuel tank 16.
FIG. 6 is a bottom view of the fuel tank 16.
FIG. 7 is an enlarged bottom view taken in the vicinity of an elastic member 20 of the fuel tank 16.
FIG. 8 is an A-A cross-sectional view of a bottom part of the fuel tank 16 in FIG. 7.
FIG. 9 is a B-B cross-sectional view of the bottom part of the fuel tank 16 in FIG. 7.
FIG. 10 is a schematic diagram of an example of cross-sectional shape of each protruding portion 24, taken along the front-rear direction.
FIG. 11 is a schematic diagram of an example of cross-sectional shape of each protruding portion 24, taken along the right-left direction.
FIG. 12 is a schematic diagram of another example of cross-sectional shape of each protruding portion 24, taken along the front-rear direction.
FIG. 13 is a schematic diagram of an example of cross shape of each protruding portion 24, taken along the front-rear direction.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention, which is defined by the claims.

On the other hand, an expression such as "comprise", "include", "have", "contain" and "constitute" are not intended to be exclusive of other components.

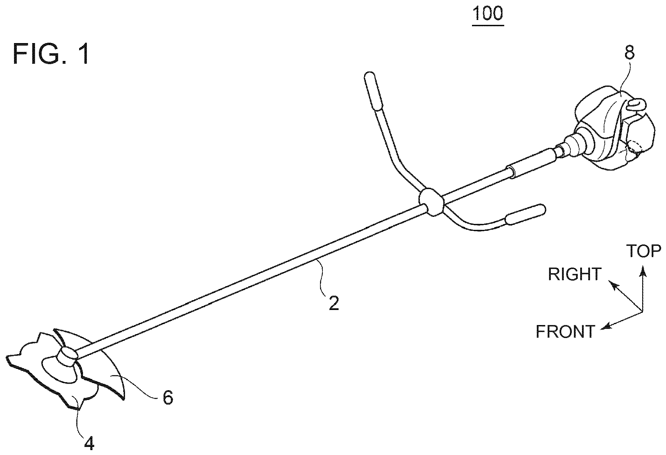

FIG. 1 is a schematic perspective view of a brush cutter 100 according to an embodiment.

As shown in FIG. 1, the brush cutter 100 includes a control rod 2, a rotatable blade 4 disposed on an end of the control rod 2, a protection cover 6 having a semi-circular shape that protrudes downward, provided so as to cover a part of the blade, and an engine 8 disposed on the other side of the control rod 2.

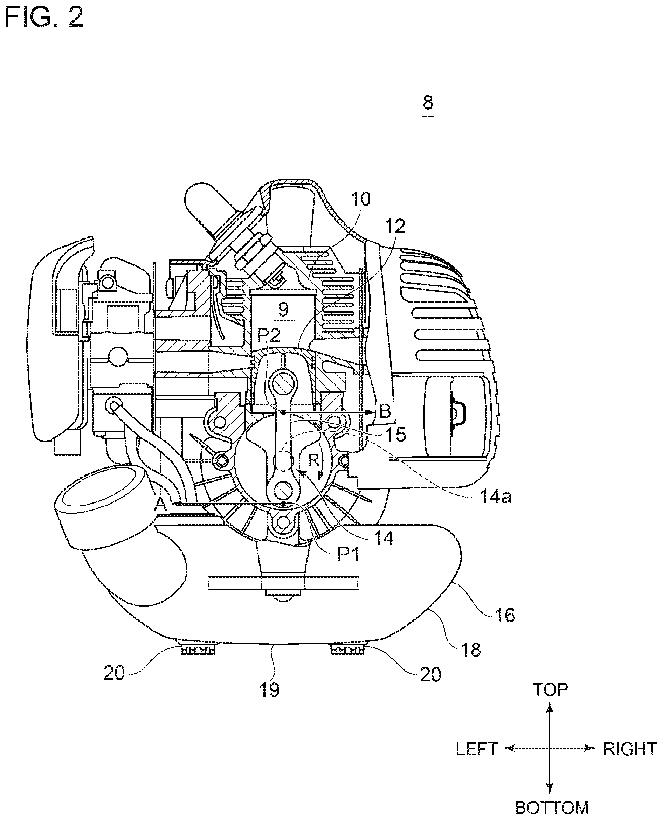

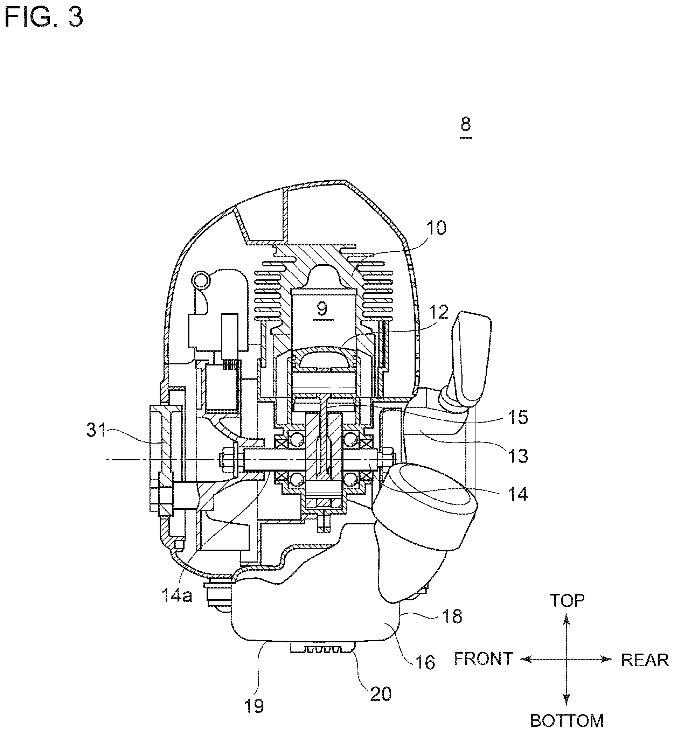

FIG. 2 is a partial cross sectional view of the engine 8 (cross sectional view perpendicular to the axial direction of a crank shaft 14 of the engine 8). FIG. 3 is a partial cross sectional view of an engine 8 (cross sectional view along the axial direction of the crank shaft 14 of the engine 8). In the embodiment shown in FIGs. 2 and 3, the engine 8 is a two-cycle one-cylinder reciprocal engine.

Herein, for the sake of convenience, the front-rear direction refers to the axial direction of the crank shaft 14 of the engine 8, and the right-left direction refers to the horizontal direction orthogonal to the front-rear direction. Furthermore, front direction refers to the output side of the crank shaft 14 with respect to the front-rear direction (in the embodiment shown in the drawings, the side of the centrifugal clutch 31 coupled to an end of the crank shaft 14), and rear direction refers to the opposite side to the output side of the crank shaft 14 with respect to the front-rear direction (in the embodiment shown in the drawings, the side of the recoil starter 13 coupled to the other end of the crank shaft 14). Furthermore, left direction refers to the rotational tangent direction A at the lower end of the crank shaft 14 with respect to the right-left direction (the rotational tangent direction at the position P1 directly below the crank shaft 14, or the rotational tangent direction at the lower end position of a crank journal 14a, with respect to the rotational direction R of the crank shaft 14), and right direction refers to the rotational tangent direction B at an upper end of the crank shaft 14 with respect to the right-left direction (the rotational direction at the position P2 directly above the crank shaft 14, or the rotational tangent direction at the upper end position of the crank journal 14a, with respect to the rotational direction R of the crank shaft 14).

As shown in FIGs. 2 and 3, the engine 8 includes a cylinder 10, a piston 12 forming a combustion chamber 9 with the cylinder 10, a crank shaft 14 for converting reciprocating motion of the piston 12 into rotational motion, and a fuel tank 16 disposed under the engine 8 and configured to function as a pedestal of the engine 8. In the exemplary embodiment shown in FIGs. 2 and 3, the piston 12 is configured to slide inside the cylinder 10 along the up-down direction of the engine 8.

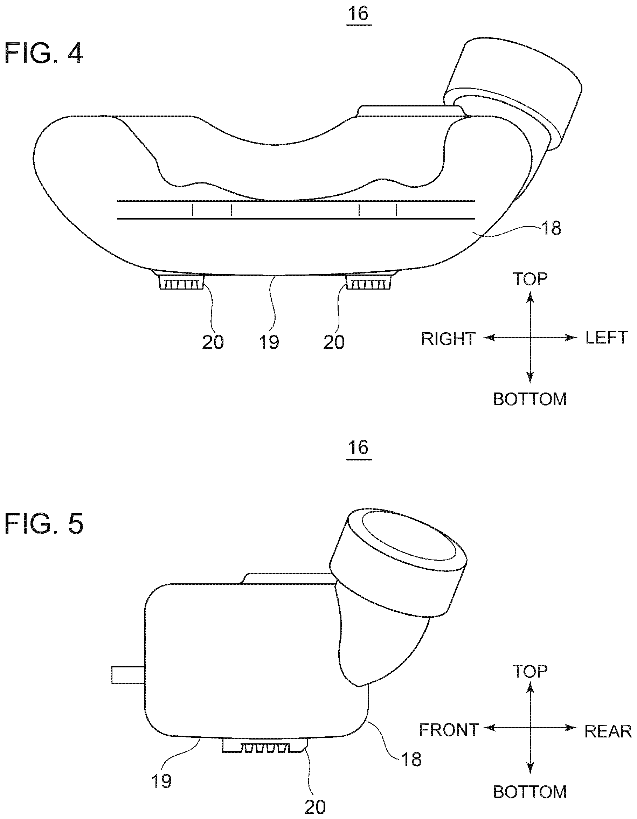

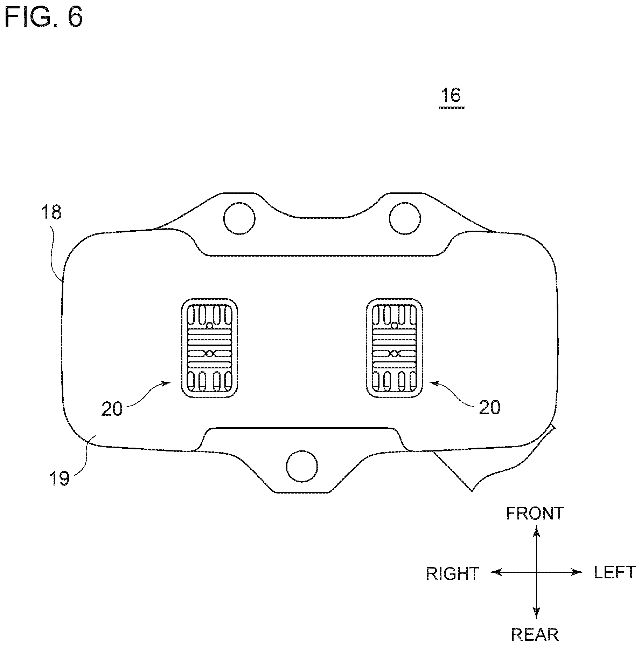

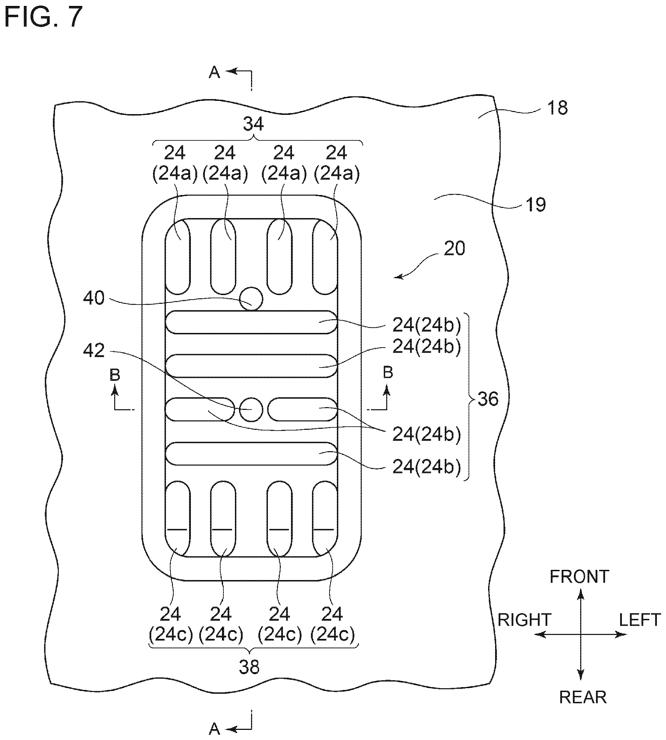

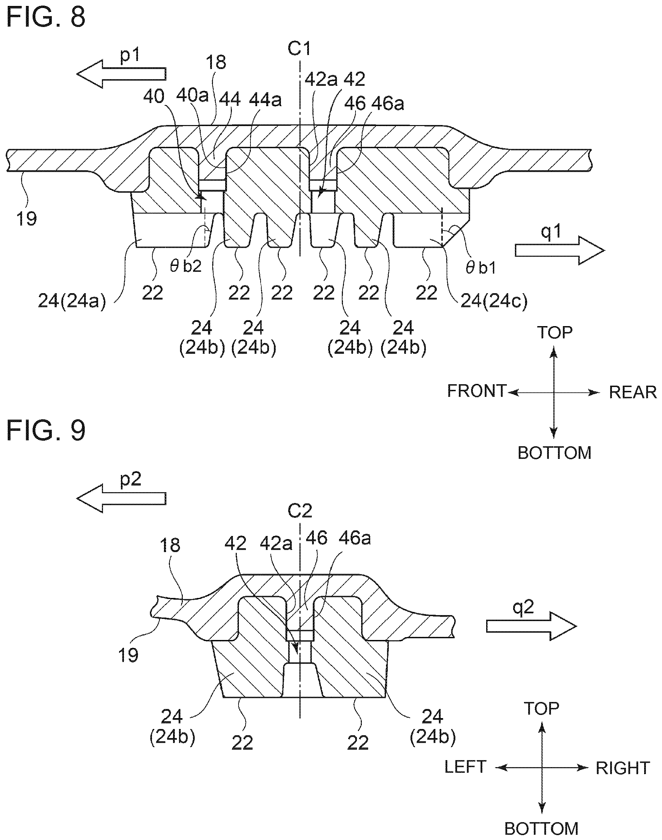

FIG. 4 is a front view of the fuel tank 16. FIG. 5 is a side view of the fuel tank 16. FIG. 6 is a bottom view of the fuel tank 16. FIG. 7 is an enlarged bottom view taken in the vicinity of an elastic member 20 of the fuel tank 16. FIG. 8 is an A-A cross-sectional view of a bottom part of the fuel tank 16 in FIG. 7. FIG. 9 is a B-B cross-sectional view of the bottom part of the fuel tank 16 in FIG. 7.

As shown in at least one of FIGs. 4 to 9, the fuel tank 16 includes a fuel tank body 18 for accommodating fuel of the engine 8, and at least one elastic member 20 (in the embodiment shown in the drawings, two elastic members 20) disposed on the bottom surface 19 of the fuel tank body 18. Each of the elastic members 20 is formed of elastomer, rubber, or resin. Each of the elastic members 20 includes at least one protruding portion 24 (a plurality of protruding portions 24 shown in the drawings) protruding downward and having a contact surface 22 to be in contact with ground, and each protruding portion 24 functions as a pedestal portion of the fuel tank 16. According to a first embodiment of the invention, the elastic member 20 has, as shown in FIGs. 8 and 9 for instance, an asymmetrical shape in at least one of the front-rear direction or the right-left direction. In the embodiment shown in FIG. 8, the elastic member 20 has an asymmetrical shape with respect to the central position C1 of the elastic member 20 in the front-rear direction. In the embodiment shown in FIG. 9, the elastic member 20 has an asymmetrical shape with respect to the central position C2 of the elastic member 20 in the right-left direction.

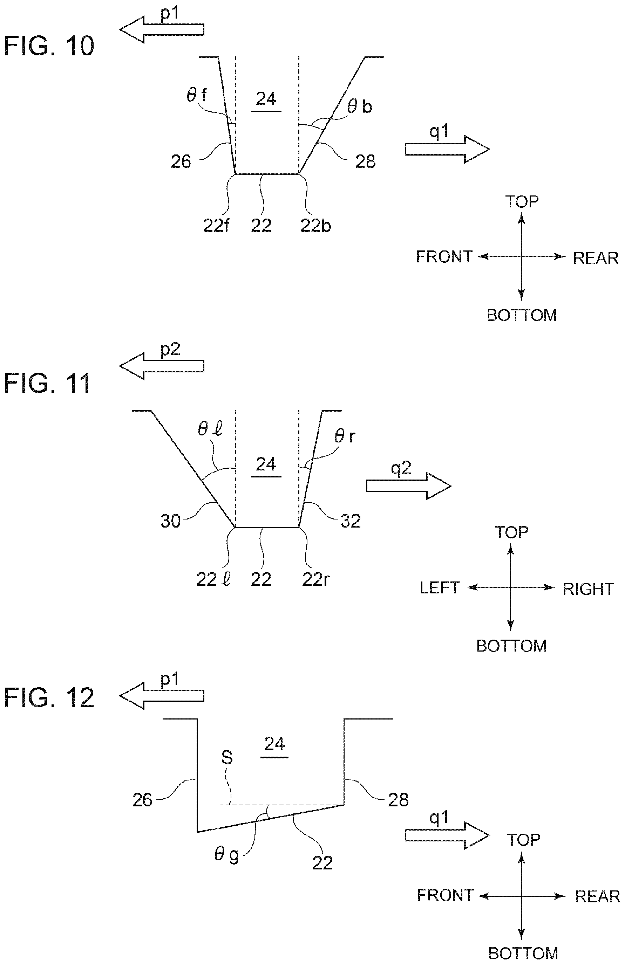

FIG. 10 is a schematic diagram of an example of cross-sectional shape of each protruding portion 24, taken along the front-rear direction. Herein, the cross-sectional shape of each protruding portion 24 is described with reference to a common schematic diagram to simplify the description. However, the respective protruding portions 24 do not need to have the same cross-sectional shape.

In the first embodiment of the invention, as shown in FIG. 10, each protruding portion 24 has a front surface 26 and a rear surface 28. The front surface 26 is formed on the front side, with respect to the front-rear direction, so as to connect to the front end 22f of the contact surface 22, and is inclined at an inclination angle θf forward with respect to the vertical direction. The rear surface 28 is formed on the rear side, with respect to the front-rear direction, so as to connect to the rear end 22b of the contact surface 22, and is inclined at an inclination angle θb rearward with respect to the vertical direction.

In the first embodiment of the invention, as shown in FIG. 10, in each protruding portion 24, the inclination angle θf of the front surface 26 with respect to the vertical direction is different from the inclination angle θb of the rear surface 28 with respect to the vertical direction.

With the above configuration, in a case where the engine 8 is in operation while being disposed on the ground, it is possible to orient the reaction force, received by the engine 8 from the ground via the elastic member 20 associated with vibration of the engine 8, in the front-rear direction. Thus, by setting the inclination angles θf, θb such that a reaction force occurs in the opposite direction q1 to the direction p1 in which the engine 8 is likely to move in vibration, with respect to the front-rear direction, it is possible to suppress movement in the front-rear direction caused by vibration of the engine 8.

For instance, as shown in FIG. 10, in each protruding portion 24, the inclination angle θb of the rear surface 28 with respect to the vertical direction may be greater than the inclination angle θf of the front surface 26 with respect to the vertical direction.

With the above configuration, in a case where the engine 8 is in operation while being disposed on the ground, it is possible to orient the reaction force, received by the engine 8 from the ground via the elastic member 20 associated with vibration of the engine 8, in the rearward direction. Thus, in a case where the engine 8 is in operation while being disposed on the ground, it is possible to suppress forward movement of the engine 8 caused by vibration of the engine 8. For instance, in a case where the brush cutter 100 (see FIG. 1) is disposed on the ground, the reaction force received by the protection cover 6, having a semi-circular shape that protrudes downward, due to vibration of the engine 8, may cause the engine 8 to move forward, and such movement can be suppressed.

While the angular degrees of the inclination angles θf, θb may be set appropriately in accordance with the characteristics of the engine, the front surface 26 and the rear surface 28 may be formed so as to satisfy θf≤3°, and θb>3°.

FIG. 11 is a schematic diagram of an example of cross-sectional shape of each protruding portion 24, taken along the right-left direction. Herein, the cross-sectional shape of each protruding portion 24 is described with reference to a common schematic diagram to simplify the description. However, the respective protruding portions 24 do not need to have the same cross-sectional shape.

As shown in FIG. 11, each protruding portion 24 has a left surface 30 and a right surface 32. The left surface 30 is formed on the left side, with respect to the right-left direction, so as to connect to the left end 221 of the contact surface 22, and is inclined leftward at an inclination angle θ1 with respect to the vertical direction. The right surface 32 is formed on the right side, with respect to the right-left direction, so as to connect to the right end 22r of the contact surface 22, and is inclined rightward at an inclination angle θr with respect to the vertical direction.

As shown in FIG. 11, in each protruding portion 24, the inclination angle θ1 of the left surface 30 with respect to the vertical direction may also be different from the inclination angle θr of the right surface 32 with respect to the vertical direction.

With the above configuration, in a case where the engine 8 is in operation while being disposed on the ground, it is possible to orient the reaction force, received by the engine 8 from the ground via the elastic member 20 associated with vibration of the engine 8, in the right-left direction. Thus, by setting the inclination angles θ1, θr such that a reaction force occurs in the opposite direction q2 to the direction p2 in which the engine 8 is likely to move, it is possible to suppress movement in the right-left direction caused by vibration of the engine 8.

For instance, as shown in FIG. 11, in each protruding portion 24, the inclination angle θ1 of the left surface 30 with respect to the vertical direction may be greater than the inclination angle θr of the right surface 32 with respect to the vertical direction.

With the above configuration, in a case where the engine 8 is in operation while being disposed on the ground, it is possible to orient the reaction force, received by the engine 8 from the ground via the elastic member 20 associated with vibration of the engine 8, toward the left side. Thus, in a case where the engine 8 is in operation while being disposed on the ground, it is possible to suppress rightward movement of the engine 8 caused by vibration of the engine 8.

For instance, in the engine 8 shown in FIG. 2, a force of explosion applies to the piston 12 inside the cylinder 10 when the piston 12 starts to move downward from the top dead center. Thus, a greater force is applied to the crank shaft 14 via the connecting rod 17 when the piston 12 moves downward, than when the piston 12 moves upward. Thus, in a case where the engine 8 is in operation while being disposed on the ground, a force is applied to the engine 8 so as to move the engine 8 in the opposite direction B (rightward direction) to the rotational tangent direction A (leftward direction) at the lower end of the crank shaft 14, due to the force of explosion inside the cylinder 10. Thus, the engine 8 is likely to move rightward. In this regard, with the inclination angle θ1 of the left surface 30 being greater than the inclination angle θr of the right surface 32, it is possible to suppress movement of the engine 8 in the direction B (right direction) caused by a force of explosion inside the cylinder 10.

While the angular degrees of the inclination angles θ1, θr may be set appropriately in accordance with the characteristics of the engine, the left surface 30 and the right surface 32 may be formed so as to satisfy θr≤3°, and θ1>3°.

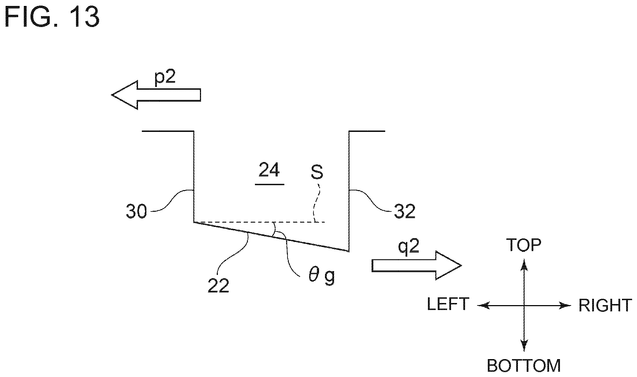

FIG. 12 is a schematic diagram of another example of cross-sectional shape of each protruding portion 24, taken along the front-rear direction. FIG. 13 is a schematic diagram of an example of cross-sectional shape of each protruding portion 24, taken along the right-left direction. Herein, the cross-sectional shape of each protruding portion 24 is described with reference to a common schematic diagram to simplify the description. However, the respective protruding portions 24 do not need to have the same cross-sectional shape.

As shown in FIG. 12 or 13, the contact surface 22 of each protruding portion 24 may be inclined in at least one of the rear-front direction or the right-left direction from the plane S orthogonal to the top-bottom direction of the engine 8. While the angular degrees of the inclination angle θg of the contact surface 22 with respect to the plane S may be set appropriately in accordance with the characteristics of the engine 8, the contact surface 22 may be formed so as to satisfy θg>5°.

With the above configuration, the contact surface 22 is inclined from the plane S in at least one of the front-rear direction or the right-left direction. Thus, in a case where the engine 8 is in operation while being disposed on the ground, it is possible to orient the reaction force, received by the engine 8 from ground via the elastic member 20 associated with vibration of the engine 8, in at least one of the front-rear direction or the right-left direction. Thus, with the inclination direction of the contact surface 22 being set such that a reaction force occurs in an opposite direction q1 (or q2) to a direction p1 (or p2) in which the engine 8 is likely to move in vibration, in at least one of the front-rear direction or the right-left direction, it is possible to suppress movement caused by vibration of the engine.

As shown in FIG. 12, the contact surface 22 of each protruding portion 24 may be inclined downward toward the front.

With the above configuration, in a case where the engine 8 is in operation while being disposed on the ground, it is possible to orient the reaction force, received by the engine 8 from the ground via the elastic member 20 associated with vibration of the engine 8, in the rearward direction. Thus, in a case where the engine 8 is in operation while being disposed on the ground, it is possible to suppress forward movement of the engine 8 caused by vibration of the engine 8. For instance, in a case where the brush cutter 100 is disposed on the ground, the reaction force received by the protection cover 6, having a semi-circular shape that protrudes downward, due to vibration of the engine 8, may cause the engine 8 to move forward, and such movement can be suppressed.

As shown in FIG. 13, the contact surface 22 of each protruding portion 24 may be inclined downward toward the right.

With the above configuration, in a case where the engine 8 is in operation while being disposed on the ground, it is possible to orient the reaction force, received by the engine 8 from the ground via the elastic member 20 associated with vibration of the engine 8, toward the left side. Thus, in a case where the engine 8 is in operation while being disposed on the ground, it is possible to suppress rightward movement of the engine 8 caused by vibration of the engine 8. For instance, it is possible to suppress movement of the engine 8 in the direction B (rightward), due to a force of explosion inside the cylinder 12 described above.

In an embodiment, as shown in FIG. 7, the at least one protruding portion 24 includes a first protruding portion group 34 including a plurality of protruding portions 24a each extending along the front-rear direction, a second protruding portion group 36 including a plurality of protruding portions 24b each extending along the right-left direction, and a third protruding portion group 38 including a plurality of protruding portions 24c each extending along the front-rear direction. The second protruding portion group 36 is disposed between the first protruding portion group 34 and the third protruding portion group 38, in the front-rear direction.

With the above configuration, the elastic member 20 can exert a high gripping force in the front-rear direction and the right-left direction. Thus, in a case where the engine 8 is in operation while being disposed on the ground, it is possible to enhance the effect to suppress movement of the engine 8 in the front-rear direction and the right-left direction caused by vibration of the engine 8.

In an embodiment, as shown in FIG. 7 for instance, the third protruding portion group 38 is disposed in rear of the first protruding portion group 34. Furthermore, as shown in FIG. 8, the inclination angle θb1 of the rear surface 28 of each protruding portion 24c of the third protruding portion group 38 with respect to the vertical direction is greater than the inclination angle θb2 of the rear surface 28 of each protruding portion 24a of the first protruding portion group 34 with respect to the vertical direction.

As the above described inclination angle θb of the rear surface 28 increases, the contact area that can be ensured tends to be small compared to the size of the elastic member 20 in the front-rear direction. In this regard, with the inclination angle θb1 being greater than the inclination angle θb2 as described above, it is possible to effectively suppress forward movement of the engine 8 caused by vibration of the engine 8, while suppressing reduction of the contact area.

In an embodiment, as shown in FIGs. 8 and 9 for instance, the elastic member 20 includes a first hole 40 and a second hole 42 on the side of the bottom surface 19 of the fuel tank body 18. On the bottom surface 19 of the fuel tank body 18, the first protrusion 44 having an outer peripheral surface 44a to be in contact with the inner peripheral surface 40a of the first hole 40, and the second protrusion 46 having an outer peripheral surface 46a to be in contact with the inner peripheral surface 42a of the second hole 42 are formed. The first hole 40 and the second hole 42 are arranged asymmetrically in at least one of the front-rear direction or the right-left direction. In the embodiment shown in FIG. 8, the first hole 40 and the second hole 42 are arranged asymmetrically with respect to the central position C1 of the elastic member 20 in the front-rear direction.

In production of a fuel tank, when mounting the elastic member 20 having an asymmetrical shape at least in the front-rear direction or the right-left direction to the bottom surface 19 of the fuel tank body 18, arranging the elastic member 20 in a wrong direction may lead to enhancement of the movement of the fuel tank 16. In this regard, with the first hole 40 and the second hole 42 being arranged asymmetrically in at least one of the front-rear direction or the right-left direction, it is possible to prevent arrangement of the elastic member 20 in a wrong direction, when mounting the elastic member 20 to the bottom surface 19 of the fuel tank body 18. Thus, it is possible to fix the elastic member 20 and the fuel tank body 18 firmly, while suppressing movement caused by vibration of the engine 8 more reliably.

Meanwhile, it is generally known that it is difficult to firmly attach elastomer and rubber, for instance, to a blow-molding object made of polyethylene. In this regard, according to findings of the present inventors, when the fuel tank body 18 is formed by blow molding using polyethylene, it is possible to firmly attach the elastic member 20 formed of elastomer to the fuel tank body 18 formed of polyethylene, by bringing polyethylene, which expands by blowing, into contact with the elastic member 20 made of elastomer pre-heated by a hot plate or the like, inside a mold.

In the above embodiment, the fuel tank 16 has a plurality of elastic members 20 (in the embodiment shown in FIG. 2, two elastic members 20). In such an embodiment, it is desirable to provide the elastic members 20 at similar distances on the right and left side from the gravity center of the engine 8, to suppress turnover and movement of the engine 8 due to vibration of the engine 8. However, the elastic members 20 may not necessarily be positioned equally. Furthermore, if the fuel tank 16 is provided with a single elastic member 20, the elastic member 20 may be disposed directly below the gravity center of the engine 8 on the bottom surface 19 of the fuel tank 16.

Furthermore, according to a second embodiment of the invention, the elastic modulus of one of the above two elastic members 20 may be different from the elastic modulus of the other one. Accordingly, by setting different elastic moduli for the respective elastic members 20 so as to generate a reaction force in an opposite direction to a direction in which the engine 8 is likely to move in vibration (net force of reaction forces (elastic forces) received by the engine 8 from the two elastic members 20 via ground), it is possible to enhance the effect to suppress movement caused by vibration of the engine 8.

Embodiments of the present invention were described in detail above, but the present invention is not limited thereto, and various amendments and modifications may be implemented within the scope of the claims.

### Description of Reference Numerals

- 2: Control rod
- 4: Blade
- 6: Protection cover
- 8: Engine
- 9: Combustion chamber
- 10: Cylinder
- 12: Piston
- 13: Recoil starter
- 14: Crank shaft
- 14a: Crank journal
- 15: Connecting rod
- 16: Fuel tank
- 18: Fuel tank body
- 19: Bottom surface
- 20: Elastic member
- 22: Contact surface
- 22f: Front end
- 22b: Rear end
- 221: Left end
- 22r: Right end
- 24 (24a, 24b, 24c): Protruding portion
- 26: Front surface
- 28: Rear surface
- 30: Left surface
- 32: Right surface
- 34: First protruding portion group
- 36: Second protruding portion group
- 38: Third protruding portion group
- 40: First hole
- 40a: Inner peripheral surface
- 42: Second hole
- 42a: Inner peripheral surface
- 44: First protrusion
- 44a: Outer peripheral surface
- 46: Second protrusion
- 46a: Outer peripheral surface
- 100: Brush cutter

## Claims

1. A brush cutter (100), comprising:
a control rod (2);
a rotatable blade (4) disposed on an end of the control rod (2);
a protection cover (6) disposed so as to cover a part of the blade 4); and
an engine (8) disposed on the other end of the control rod (2), the engine (8) comprising;
a cylinder (10);
a piston (12) forming a combustion chamber (9) with the cylinder (10);
a crank shaft (14) for converting reciprocating motion of the piston (12) into rotational motion; and
a fuel tank (16), the-fuel tank (16) comprising:
a fuel tank body (18) for accommodating fuel of the engine (8); and at least one elastic member (20) disposed on a bottom surface (19) of the fuel tank body (18),
wherein the at least one elastic member (20) includes at least one protruding portion (24) protruding downward and having a contact surface (22) suitable to be in contact with ground and functioning as a pedestal portion of the fuel tank (16), the at least one elastic member (20) having an asymmetric shape with respect to the central position of the elastic member (C1, C2) in at least one of an axial direction of the crank shaft of the engine (14) referred to as front-rear direction or a horizontal direction orthogonal to the front-rear direction and referred to as right-left direction, and wherein, defining that a front direction is an output side of the crank shaft (14) in the front-rear direction, the protruding portion (24) includes:
a front surface (26) formed on a front side in the front-rear direction; and
a rear surface (28) formed on a rear side in the front-rear direction, and
an inclination angle (θ_{f}) of the front surface (26) with respect to a vertical direction is different from an inclination angle (θ_{b}) of the rear surface (28) with respect to the vertical direction.

2. The brush cutter according to claim 1, wherein the inclination angle (θ_{b}) of the rear surface (28) with respect to the vertical direction is greater than the inclination angle (θ_{f}) of the front surface (26) with respect to the vertical direction.

3. The brush cutter according to any one of claims 1 or 2;
wherein, defining that a left direction is a rotational tangent direction at a lower end of the crank shaft (14) in the right-left direction,
the protruding portion (24) includes:
a left surface (30) formed on a left side in the right-left direction; and
a right surface (32) formed on a right side in the right-left direction, and
an inclination angle (θₗ) of the left surface (30) with respect to a vertical direction is different from an inclination angle (θᵣ) of the right surface (32) with respect to the vertical direction.

4. The brush cutter according to claim 3, wherein the inclination angle (θₗ) of the left surface (30) with respect to the vertical direction is greater than the inclination angle (θᵣ) of the right surface (32) with respect to the vertical direction.

5. The brush cutter according to any one of claims 1 to 4, wherein the contact surface (22) of the protruding portion (24) is inclined in at least one of the front-rear direction or the right-left direction.

6. The brush cutter according to claim 5, wherein, defining that a front direction is an output side of the crank shaft (14) in the front-rear direction, the contact surface (22) of the protruding portion (24) is inclined so as to be positioned lower in the front direction.

7. The brush cutter according to claim 5 or 6, wherein, defining that a left direction is a rotational tangent direction at a lower end of the crank shaft (14) in the right-left direction, the contact surface (22) of the protruding portion (24) is inclined so as to be positioned lower in the right direction.

8. The brush cutter according to any one of claims 1 to 7, wherein the at least one protruding portion (24) comprises a first protruding portion group (34) including a plurality of protruding portions each of which extends along the front-rear direction, a second protruding portion group (36) including a plurality of protruding portions each of which extends along the right-left direction, and a third protruding portion (38) group including a plurality of protruding portions each of which extends along the front-rear direction, wherein the second protruding portion group (36) is disposed between the first protruding portion group (34) and the third protruding portion group (38) in the front-rear direction.

9. The brush cutter according to claim 8, wherein, defining that a front direction is an output side of the crank shaft (14) in the front-rear direction, the third protruding portion group (38) is disposed in rear of the first protruding portion group (34), and each protruding portion of the first (34) to third (38) protruding portion groups includes:
a front surface formed in front in the front-rear direction; and a rear surface formed in rear in the front-rear direction, wherein an inclination angle of the rear surface with respect to a vertical direction is greater than an inclination angle of the front surface with respect to the vertical direction, in each protruding portion of the first (34) to third (38) protruding portion groups.

10. The brush cutter according to claim 8 or 9, wherein, defining that a front direction is an output side of the crank shaft (14) in the front-rear direction, the third protruding portion group (38) is disposed in rear of the first protruding portion group (34), and each protruding portion of the first to third protruding portion groups includes:
a front surface formed in front in the front-rear direction; and
a rear surface formed in rear in the front-rear direction,
wherein an inclination angle of the rear surface with respect to a vertical direction in each protruding portion of the third protruding portion group (38) is greater than an inclination angle of the rear surface with respect to the vertical direction in each protruding portion of the first protruding portion group (34).

11. The brush cutter according to any one of claims 1 to 10, wherein the elastic member (20)
includes a first hole (40) and a second hole (42) disposed proximate to a bottom surface of the fuel tank body (18),
wherein the bottom surface of the fuel tank body (18) includes a first projection and a second projection formed thereon, the first projection having an outer peripheral surface to be in contact with an inner peripheral surface of the first hole (40) and the second projection having an outer peripheral surface to be in contact with an inner peripheral surface of the second hole (42), and wherein the first hole (40) and the second hole (42) are disposed asymmetrically in at least one of the front-rear direction or the right-left direction.

12. The brush cutter according to any one of claims 1 to 11, wherein the at least one elastic member (20) comprises two elastic members having different elastic moduli from each other.

13. A brush cutter (100), comprising:
a control rod (2);
a rotatable blade (4) disposed on an end of the control rod (2);
a protection cover (6) disposed so as to cover a part of the blade (4); and
an engine (8) disposed on the other end of the control rod (2), the engine (8) comprising;
a cylinder (10);
a piston (12) forming a combustion chamber (9) with the cylinder (10);
a crank shaft (14) for converting reciprocating motion of the piston (12) into rotational motion; and
a fuel tank (16),
the-fuel tank (16) comprising:
a fuel tank body (18) for accommodating fuel of an engine,
and at least two elastic members disposed on a bottom surface of the fuel tank body (18), each of which having a contact surface to be in contact with ground,
wherein the at least two elastic members include two elastic members having different elastic moduli from each other, and
wherein one of the at least two elastic members has a different elastic modulus from the other of the at least two elastic members.

## Patentansprüche

1. Freischneidevorrichtung (100), die Folgendes umfasst:
eine Regelstange (2);
eine drehbare Klinge (4), die an einem Ende der Regelstange (2) angeordnet ist;
eine Schutzabdeckung (6), die so angeordnet ist, dass sie einen Teil der Klinge (4) abdeckt; und
einen Motor (8), der an dem anderen Ende der Regelstange (2) angeordnet ist, wobei der Motor (8) Folgendes umfasst;
einen Zylinder (10);
einen Kolben (12), der mit dem Zylinder (10) einen Verbrennungsraum (9) ausbildet;
eine Kurbelwelle (14) zum Umwandeln einer Hin- und Herbewegung des Kolbens (12) in eine Drehbewegung; und
einen Kraftstofftank (16), wobei der Kraftstofftank (16) Folgendes umfasst:
einen Kraftstofftankkörper (18) zum Aufnehmen von Kraftstoff des Motors (8); und wenigstens ein elastisches Element (20), das an einer Bodenfläche (19) des Kraftstofftankkörpers (18) angeordnet ist,
wobei das wenigstens eine elastische Element (20) wenigstens einen vorstehenden Abschnitt (24) umfasst, der nach unten vorsteht und eine Kontaktoberfläche (22) aufweist, die geeignet ist, um mit dem Boden in Kontakt zu stehen und als ein Sockelabschnitt des Kraftstofftanks (16) zu wirken, wobei das wenigstens eine elastische Element (20) eine asymmetrische Form hinsichtlich der zentralen Position des elastischen Elements (C1, C2) in einer axialen Richtung der Kurbelwelle des Motors (14), die als Vorne-Hinten-Richtung bezeichnet wird, und/oder einer horizontalen Richtung orthogonal zu der Vorne-Hinten-Richtung aufweist, und die als Rechts-Links-Richtung bezeichnet wird, und wobei definiert wird, dass eine Vorwärtsrichtung eine Ausgangsseite der Kurbelwelle (14) in der Vorne-Hinten-Richtung ist, wobei der vorstehende Abschnitt (24) Folgendes beinhaltet:
eine vordere Oberfläche (26), die an einer vorderen Seite in der Vorne-Hinten-Richtung ausgebildet ist; und
eine hintere Oberfläche (28), die an einer hinteren Seite in der Vorne-Hinten-Richtung ausgebildet ist, und
wobei ein Neigungswinkel (θ_{f}) der vorderen Oberfläche (26) sich hinsichtlich einer vertikalen Richtung von einem Neigungswinkel (θ_{b}) der hinteren Oberfläche (28) hinsichtlich der vertikalen Richtung unterscheidet.

2. Freischneidevorrichtung nach Anspruch 1, wobei der Neigungswinkel (θ_{b}) der hinteren Oberfläche (28) hinsichtlich der vertikalen Richtung größer als der Neigungswinkel (θ_{f}) der vorderen Oberfläche (26) hinsichtlich der vertikalen Richtung ist.

3. Freischneidevorrichtung nach einem der Ansprüche 1 oder 2;
wobei definiert wird, dass eine linke Richtung eine Drehtangentenrichtung an einem unteren Ende der Kurbelwelle (14) in der Rechts-Links-Richtung ist, wobei
der vorstehende Abschnitt (24) Folgendes beinhaltet:
eine linke Oberfläche (30), die auf einer linken Seite in der Rechts-Links-Richtung ausgebildet ist; und
eine rechte Oberfläche (32), die auf einer rechten Seite in der Rechts-Links-Richtung ausgebildet ist und
wobei ein Neigungswinkel (θₗ) der linken Oberfläche (30) sich hinsichtlich einer vertikalen Richtung von einem Neigungswinkel (θᵣ) der rechten Oberfläche (32) hinsichtlich der vertikalen Richtung unterscheidet.

4. Freischneidevorrichtung nach Anspruch 3, wobei der Neigungswinkel (θₗ) der linken Oberfläche (30) hinsichtlich der vertikalen Richtung größer als der Neigungswinkel (θᵣ) der rechten Oberfläche (32) hinsichtlich der vertikalen Richtung ist.

5. Freischneidevorrichtung nach einem der Ansprüche 1 bis 4, wobei die Kontaktoberfläche (22) des vorstehenden Abschnitts (24) in der Vorne-Hinten-Richtung und/oder der Rechts-Links-Richtung geneigt ist.

6. Freischneidevorrichtung nach Anspruch 5, wobei definiert wird, dass eine Vorwärtsrichtung eine Ausgangsseite der Kurbelwelle (14) in der Vorne-Hinten-Richtung ist, wobei die Kontaktoberfläche (22) des vorstehenden Abschnitts (24) geneigt ist, so dass sie in der Vorwärtsrichtung tiefer positioniert ist.

7. Freischneidevorrichtung nach Anspruch 5 oder 6, wobei definiert wird, dass eine linke Richtung eine Drehtangentenrichtung an einem unteren Ende der Kurbelwelle (14) in der Rechts-Links-Richtung ist, wobei die Kontaktoberfläche (22) des vorstehenden Abschnitts (24) geneigt ist, so dass sie in der rechten Richtung tiefer positioniert ist.

8. Freischneidevorrichtung nach einem der Ansprüche 1 bis 7, wobei der wenigstens eine vorstehende Abschnitt (24) eine erste Gruppe (34) von vorstehenden Abschnitten, die mehrere vorstehende Abschnitte beinhaltet, von denen sich jeder entlang der Vorne-Hinten-Richtung erstreckt, eine zweite Gruppe (36) von vorstehenden Abschnitten, die mehrere vorstehende Abschnitte beinhaltet, von denen sich jeder entlang der Rechts-Links-Richtung erstreckt, und eine dritte Gruppe (38) von vorstehenden Abschnitten umfasst, die mehrere vorstehende Abschnitte beinhaltet, von denen sich jeder entlang der Vorne-Hinten-Richtung erstreckt, wobei die zweite Gruppe (36) von vorstehenden Abschnitten zwischen der ersten Gruppe (34) von vorstehenden Abschnitten und der dritten Gruppe (38) von vorstehenden Abschnitten in der Vorne-Hinten-Richtung angeordnet ist.

9. Freischneidevorrichtung nach Anspruch 8, wobei definiert wird, dass eine Vorwärtsrichtung eine Ausgangsseite der Kurbelwelle (14) in der Vorne-Hinten-Richtung ist, wobei die dritte Gruppe (38) von vorstehenden Abschnitten hinter der ersten (34) Gruppe von vorstehenden Abschnitten angeordnet ist, und jeder vorstehende Abschnitt der ersten (34) bis dritten Gruppe (38) von vorstehenden Abschnitten Folgendes beinhaltet:
eine vordere Oberfläche, die vorne in der Vorne-Hinten-Richtung ausgebildet ist; und eine hintere Oberfläche, die hinten in der Vorne-Hinten-Richtung ausgebildet ist, wobei in jedem vorstehenden Abschnitt der ersten (34) bis dritten Gruppe (38) von vorstehenden Abschnitten ein Neigungswinkel der hinteren Oberfläche hinsichtlich einer vertikalen Richtung größer als ein Neigungswinkel der vorderen Oberfläche hinsichtlich der vertikalen Richtung ist.

10. Freischneidevorrichtung nach Anspruch 8 oder 9, wobei definiert wird, dass eine Vorwärtsrichtung eine Ausgangsseite der Kurbelwelle (14) in der Vorne-Hinten-Richtung ist, wobei die dritte Gruppe (38) von vorstehenden Abschnitten hinter der ersten (34) Gruppe von vorstehenden Abschnitten angeordnet ist, und jeder vorstehende Abschnitt der ersten bis dritten Gruppe von vorstehenden Abschnitten Folgendes beinhaltet:
eine vordere Oberfläche, die vorne in der Vorne-Hinten-Richtung ausgebildet ist; und
eine hintere Oberfläche, die hinten in der Vorne-Hinten-Richtung ausgebildet ist,
wobei ein Neigungswinkel der hinteren Oberfläche hinsichtlich einer vertikalen Richtung in jedem vorstehenden Abschnitt der dritten Gruppe (38) von vorstehenden Abschnitten größer als ein Neigungswinkel der hinteren Oberfläche hinsichtlich der vertikalen Richtung in jedem vorstehenden Abschnitt der ersten Gruppe (34) von vorstehenden Abschnitten ist.

11. Freischneidevorrichtung nach einem der Ansprüche 1 bis 10, wobei das elastische Element (20) ein erstes Loch (40) und ein zweites Loch (42) beinhaltet, die nahe einer Bodenfläche des Kraftstofftankkörpers (18) angeordnet sind,
wobei die Bodenfläche des Kraftstofftankkörpers (18) einen ersten Vorsprung und einen zweiten Vorsprung beinhaltet, die darauf ausgebildet sind, wobei der erste Vorsprung eine äußere Umfangsoberfläche aufweist, um mit einer inneren Umfangsoberfläche des ersten Lochs (40) in Kontakt zu stehen, und der zweite Vorsprung eine äußere Umfangsoberfläche aufweist, um mit einer inneren Umfangsoberfläche des zweiten Lochs (42) in Kontakt zu stehen, und wobei das erste Loch (40) und das zweite Loch (42) asymmetrisch in der Vorne-Hinten-Richtung und/oder der Rechts-Links-Richtung angeordnet ist.

12. Freischneidevorrichtung nach einem der Ansprüche 1 bis 11, wobei das wenigstens eine elastische Element (20) zwei elastische Elemente umfasst, die voneinander verschiedene Elastizitätsmodule aufweist.

13. Freischneidevorrichtung (100), die Folgendes umfasst:
eine Regelstange (2);
eine drehbare Klinge (4), die an einem Ende der Regelstange (2) angeordnet ist;
eine Schutzabdeckung (6), die so angeordnet ist, dass sie einen Teil der Klinge (4) abdeckt; und
einen Motor (8), der an dem anderen Ende der Regelstange (2) angeordnet ist, wobei der Motor (8) Folgendes umfasst;
einen Zylinder (10);
einen Kolben (12), der mit dem Zylinder (10) einen Verbrennungsraum (9) ausbildet;
eine Kurbelwelle (14) zum Umwandeln einer Hin- und Herbewegung des Kolbens (12) in eine Drehbewegung; und
einen Kraftstofftank (16), wobei der Kraftstofftank (16) Folgendes umfasst:
einen Kraftstofftankkörper (18) zum Aufnehmen von Kraftstoff eines Motors und wenigstens zwei elastische Elemente, die an einer Bodenfläche des Kraftstofftankkörpers (18) angeordnet sind, von denen jedes eine Kontaktoberfläche aufweist, um mit dem Boden in Kontakt zu sein,
wobei die wenigstens zwei elastischen Elemente zwei elastische Elemente beinhalten, die voneinander verschiedene Elastizitätsmodule aufweisen, und
wobei eines der wenigstens zwei elastischen Elemente ein verschiedenes Elastizitätsmodul als das andere der wenigstens zwei elastischen Elemente aufweist.

## Revendications

1. Débroussailleuse (100), comprenant :
une tige de commande (2) ;
une lame pouvant être entraînée en rotation (4) qui est disposée sur une extrémité de la tige de commande (2) ;
un moyen de recouvrement de protection (6) qui est disposé de manière à ce qu'il recouvre une partie de la lame (4) ; et
un moteur (8) qui est disposé sur l'autre extrémité de la tige de commande (2), le moteur (8) comprenant :
un cylindre (10) ;
un piston (12) qui forme une chambre de combustion (9) avec le cylindre (10) ;
un vilebrequin (14) pour convertir un déplacement en va-et-vient du piston (12) selon un déplacement en rotation ; et
un réservoir de carburant (16), le réservoir de carburant (16) comprenant :
un corps de réservoir de carburant (18) pour loger du carburant du moteur (8) ; et au moins un élément élastique (20) qui est disposé sur une surface de fond (19) du corps de réservoir de carburant (18) ;
dans laquelle l'au moins un élément élastique (20) inclut au moins une partie en protubérance (24) qui fait saillie vers le bas et qui comporte une surface de contact (22) qui convient pour venir en contact avec le sol et qui joue le rôle de partie de base du réservoir de carburant (16), l'au moins un élément élastique (20) présentant une forme asymétrique par rapport à la position centrale de l'élément élastique (C1, C2) dans au moins une direction parmi une direction axiale du vilebrequin (14) du moteur qui est appelée direction avant - arrière et une direction horizontale qui est orthogonale à la direction avant - arrière et qui est appelée direction droite - gauche, et dans laquelle, en définissant qu'une direction avant est un côté de sortie du vilebrequin (14) dans la direction avant - arrière, la partie en protubérance (24) inclut :
une surface avant (26) qui est formée sur un côté avant dans la direction avant - arrière ; et
une surface arrière (28) qui est formée sur un côté arrière dans la direction avant - arrière ; et
un angle d'inclinaison (θ_{f}) de la surface avant (26) par rapport à une direction verticale est différent d'un angle d'inclinaison (θ_{b}) de la surface arrière (28) par rapport à la direction verticale.

2. Débroussailleuse selon la revendication 1, dans laquelle l'angle d'inclinaison (θ_{b}) de la surface arrière (28) par rapport à la direction verticale est supérieur à l'angle d'inclinaison (θ_{f}) de la surface avant (26) par rapport à la direction verticale.

3. Débroussailleuse selon l'une quelconque des revendications 1 ou 2 ;
dans laquelle, en définissant qu'une direction à gauche est une direction de tangente en rotation au niveau d'une extrémité inférieure du vilebrequin (14) dans la direction droite - gauche,
la partie en protubérance (24) inclut :
une surface gauche (30) qui est formée sur un côté gauche dans la direction droite - gauche ; et
une surface droite (32) qui est formée sur un côté droit dans la direction droite - gauche ; et
un angle d'inclinaison (θ_{f}) de la surface gauche (30) par rapport à une direction verticale est différent d'un angle d'inclinaison (θᵣ) de la surface droite (32) par rapport à la direction verticale.

4. Débroussailleuse selon la revendication 3, dans laquelle l'angle d'inclinaison (θ_{f}) de la surface gauche (30) par rapport à la direction verticale est supérieur à l'angle d'inclinaison (θᵣ) de la surface droite (32) par rapport à la direction verticale.

5. Débroussailleuse selon l'une quelconque des revendications 1 à 4, dans laquelle la surface de contact (22) de la partie en protubérance (24) est inclinée dans au moins une direction parmi la direction avant - arrière et la direction droite - gauche.

6. Débroussailleuse selon la revendication 5, dans laquelle, en définissant qu'une direction avant est un côté de sortie du vilebrequin (14) dans la direction avant - arrière, la surface de contact (22) de la partie en protubérance (24) est inclinée de telle sorte qu'elle soit positionnée plus bas dans la direction avant.

7. Débroussailleuse selon la revendication 5 ou 6, dans laquelle, en définissant qu'une direction gauche est une direction de tangente en rotation au niveau d'une extrémité inférieure du vilebrequin (14) dans la direction droite - gauche, la surface de contact (22) de la partie en protubérance (24) est inclinée de telle sorte qu'elle soit positionnée plus bas dans la direction à droite.

8. Débroussailleuse selon l'une quelconque des revendications 1 à 7, dans laquelle l'au moins une partie en protubérance (24) comprend un premier groupe de parties en protubérance (34) qui inclut une pluralité de parties en protubérance dont chacune est étendue suivant la direction avant - arrière, un deuxième groupe de parties en protubérance (36) qui inclut une pluralité de parties en protubérance dont chacune est étendue suivant la direction droite - gauche et un troisième groupe de parties en protubérance (38) qui inclut une pluralité de parties en protubérance dont chacune est étendue suivant la direction avant - arrière, dans laquelle le deuxième groupe de parties en protubérances (36) est disposé entre le premier groupe de parties en protubérance (34) et le troisième groupe de parties en protubérance (38) dans la direction avant - arrière.

9. Débroussailleuse selon la revendication 8, dans laquelle, en définissant qu'une direction avant est un côté de sortie du vilebrequin (14) dans la direction avant - arrière, le troisième groupe de parties en protubérance (38) est disposé à l'arrière du premier groupe de parties en protubérance (34), et chaque partie en protubérance des premier (34) à troisième (38) groupes de parties en protubérance inclut :
une surface avant qui est formée à l'avant dans la direction avant - arrière ; et une surface arrière qui est formée à l'arrière dans la direction avant - arrière, dans laquelle un angle d'inclinaison de la surface arrière par rapport à une direction verticale est supérieur à un angle d'inclinaison de la surface avant par rapport à la direction verticale, au niveau de chaque partie en protubérance des premier (34) à troisième (38) groupes de parties en protubérance.

10. Débroussailleuse selon la revendication 8 ou 9, dans laquelle, en définissant qu'une direction avant est un côté de sortie du vilebrequin (14) dans la direction avant - arrière, le troisième groupe de parties en protubérance (38) est disposé à l'arrière du premier groupe de parties en protubérance (34), et chaque partie en protubérance des premier à troisième groupes de parties en protubérance inclut :
une surface avant qui est formée à l'avant dans la direction avant - arrière ; et
une surface arrière qui est formée à l'arrière dans la direction avant - arrière ;
dans laquelle un angle d'inclinaison de la surface arrière par rapport à une direction verticale au niveau de chaque partie en protubérance du troisième groupe de parties en protubérance (38) est supérieur à un angle d'inclinaison de la surface arrière par rapport à la direction verticale au niveau de chaque partie en protubérance du premier groupe de parties en protubérance (34).

11. Débroussailleuse selon l'une quelconque des revendications 1 à 10, dans laquelle l'élément élastique (20) inclut un premier trou (40) et un second trou (42) selon une disposition à proximité d'une surface de fond du corps de réservoir de carburant (18) ;
dans laquelle la surface de fond du corps de réservoir de carburant (18) inclut une première projection et une seconde projection selon une formation dessus, la première projection comportant une surface périphérique externe qui est destinée à venir en contact avec une surface périphérique interne du premier trou (40) et la seconde projection comportant une surface périphérique externe qui est destinée à venir en contact avec une surface périphérique interne du second trou (42), et dans laquelle le premier trou (40) et le second trou (42) sont disposés de façon asymétrique dans au moins une direction parmi la direction avant - arrière et la direction droite - gauche.

12. Débroussailleuse selon l'une quelconque des revendications 1 à 11, dans laquelle l'au moins un élément élastique (20) comprend deux éléments élastiques qui présentent des modules élastiques qui sont différents l'un de l'autre.

13. Débroussailleuse (100), comprenant :
une tige de commande (2) ;
une lame pouvant être entraînée en rotation (4) qui est disposée sur une extrémité de la tige de commande (2) ;
un moyen de recouvrement de protection (6) qui est disposé de manière à ce qu'il recouvre une partie de la lame (4) ; et
un moteur (8) qui est disposé sur l'autre extrémité de la tige de commande (2), le moteur (8) comprenant :
un cylindre (10) ;
un piston (12) qui forme une chambre de combustion (9) avec le cylindre (10) ;
un vilebrequin (14) pour convertir un déplacement en va-et-vient du piston (12) selon un déplacement en rotation ; et
un réservoir de carburant (16),
le réservoir de carburant (16) comprenant :
un corps de réservoir de carburant (18) pour loger du carburant d'un moteur ; et
au moins deux éléments élastiques qui sont disposés sur une surface de fond du corps de réservoir de carburant (18), dont chacun comporte une surface de contact qui est destinée à venir en contact avec le sol ;
dans laquelle les au moins deux éléments élastiques incluent deux éléments élastiques qui présentent des modules élastiques qui sont différents l'un de l'autre ; et
dans laquelle l'un des au moins deux éléments élastiques présente un module élastique qui est différent de celui de l'autre des au moins deux éléments élastiques.
